# EUROPEAN PATENT SPECIFICATION

(11) **EP 3 133 239 B1**
(45) Date of publication and mention of the grant of the patent: **29.03.2023**
(21) Application number: 16184998.9
(22) Date of filing: 19.08.2016
(51) Int. Cl.: F01D 5/06, F01D 5/08, F01D 11/02, F16J 15/44

(54) **ASSEMBLY FOR ROTATIONAL EQUIPMENT**
ANORDNUNG FÜR ROTIERENDE APPARATUR
AGENCEMENT POUR ÉQUIPEMENT ROTATIF

(30) Priority: 19.08.2015 US 201514830497
(43) Date of publication of application: 22.02.2017
(73) Proprietor: Raytheon Technologies Corporation, Farmington, CT 06032 (US)
(72) Inventor: ACKERMANN, William K., East Hartford, CT Connecticut 06118 (US); CRAWLEY, Clifton J.Jr., Glastonbury, CT Connecticut 06033 (US); SCHWARZ, Frederick M., Glastonbury, CT Connecticut 06033 (US)
(74) Representative: Dehns

(56) References cited:
- EP-A1- 3 112 601
- EP-A1- 3 115 659
- US-A- 4 426 087
- US-A- 4 657 482
- US-A- 5 333 993
- US-A1- 2005 169 749
- US-A1- 2013 195 627
- US-B2- 8 002 285

## Description

### BACKGROUND OF THE INVENTION

### 1. Technical Field of the invention

This invention relates generally to rotational equipment and, more particularly, to an assembly for rotational equipment.

### 2. Background Information

Rotational equipment typically includes one or more seal assemblies for sealing gaps between rotors and stators. A typical seal assembly includes a contact seal with a seal element such as a knife edge seal that engages a seal land. Such a contact seal, however, can generate a significant quantity of heat which can reduce efficiency of the rotational equipment as well as subject other components of the rotational equipment to high temperatures and internal stresses. To accommodate the high temperatures, other components of the rotational equipment may be constructed from specialty high temperature materials, which can significantly increase the manufacturing and servicing costs as well as the mass of the rotational equipment. While non-contact seals have been developed in an effort to reduce heat within rotational equipment, such non-contact seals can be difficult to configure within the rotational equipment. Such non-contact seals and associated components (e.g., shafts, linkages, etc.) may also need to be replaced when incidental contact occurs.

US 5 333 993 discloses a gas turbine engine in which the last stage high pressure compressor disk has a rearwardly extending cone bolted via an intermediate rotor disk to the forward shaft of the first stage disk of the high pressure turbine. The intermediate rotor disk is provided with seal teeth forming a seal with the stationary structure. Cooling air is guided through a stationary, multiple-orifice nozzle towards the first stage disk of the high pressure turbine.

US 4 657 482 discloses a gas turbine engine in which the last stage high pressure compressor disk is connected to the first stage disk of the high pressure turbine by means of a shaft. Pre swirl nozzles guide cooling air to flow between a static wall and the rotating shaft to cool the shaft.

There is a need in the art for improved assemblies for rotational equipment.

### SUMMARY OF THE INVENTION

According to an aspect of the present invention, an assembly is provided for rotational equipment, as claimed in claim 1.

The non-contact seal may be a hydrostatic non-contact seal.

The non-contact seal may include an annular base, a plurality of shoes and a plurality of spring elements. The shoes may be arranged around and radially adjacent the seal land. Each of the spring elements may be radially between and connect a respective one of the shoes to the base.

The seal land may be an outer hub of the rotor disk structure.

The rotor disk may include an annular counterweight mass and an annular web extending radially inward to the counterweight mass.

The seal land may include a cylindrical outer surface. The gap may extend radially between the stator structure and the outer surface.

The seal land may include or be configured as an axially extending annular flange which forms the outer surface.

The second rotor disk structure may be in a last stage of a high pressure compressor section.

The duct may extend towards the seal assembly. The seal assembly may be configured with an aperture to provide a controlled leakage axially thereacross.

A combustor may be included and downstream of the bladed rotor assembly. A diffuser structure may be included and form a diffuser plenum around the combustor. The stator structure may be configured with the diffuser structure.

The foregoing features and the operation of the invention will become more apparent in light of the following description and the accompanying drawings.

### BRIEF DESCRIPTION OF THE DRAWINGS

FIG. 1 is a side cutaway illustration of a gas turbine engine.
FIG. 2 is a side cutaway / block diagram illustration of a combustor section of the gas turbine engine.
FIG. 3 is a side cutaway illustration of a portion of a high pressure compressor (HPC) section and the combustor section.
FIG. 3A illustrates the components of FIG. 3 along with select cooling air flows.
FIG. 4 is a side cutaway illustration of a portion of an alternative high pressure compressor (HPC) section and the combustor section, not falling within the scope of the claims.
FIG. 4A illustrates the components of FIG. 4 along with select cooling air flows.
FIG. 5 is a perspective illustration of a non-contact seal.
FIG. 6 is a perspective illustration of a portion of the non-contact seal of FIG. 5.
FIG. 7 is a cross-sectional illustration of a portion of the non-contact seal of FIG. 5.
FIGS. 8 and 9 are side sectional illustrations of alternative portions of the non-contact seal of FIG. 5.
FIG. 10 is an end view illustration of a portion of a plate.
FIG. 11 is a force balance diagram of a shoe depicting aerodynamic forces, spring forces and secondary seal forces acting on a shoe.

### DETAILED DESCRIPTION OF THE INVENTION

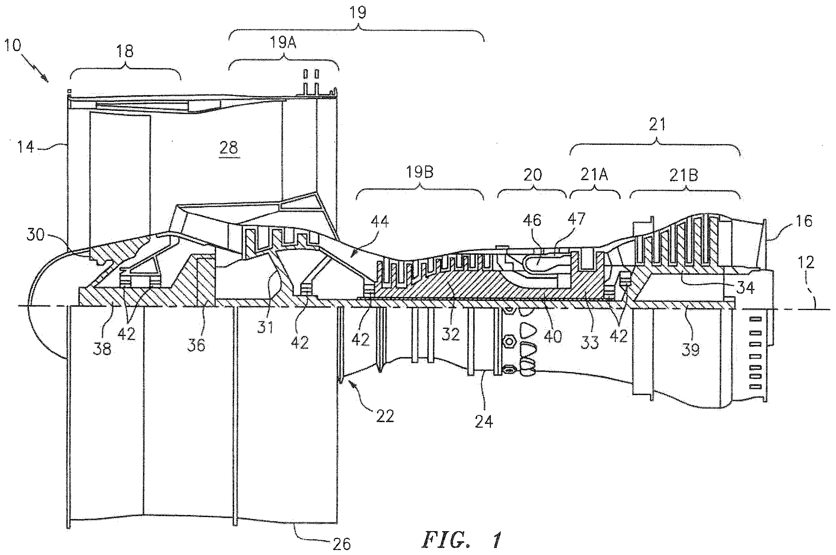

FIG. 1 is a side cutaway illustration of a gas turbine engine 10 for an aircraft propulsion system. This turbine engine 10 is configured as a geared turbofan engine, and extends along an axial centerline 12 between an upstream airflow inlet 14 and a downstream airflow exhaust 16. The turbine engine 10 includes a fan section 18, a compressor section 19, a combustor section 20 and a turbine section 21. The compressor section 19 includes a low pressure compressor (LPC) section 19A and a high pressure compressor (HPC) section 19B. The turbine section 21 includes a high pressure turbine (HPT) section 21A and a low pressure turbine (LPT) section 21B.

The engine sections 18-21 are arranged sequentially along the centerline 12 within an engine housing 22. This housing 22 includes an inner case 24 (e.g., a core case) and an outer case 26 (e.g., a fan case). The inner case 24 may house one or more of the engine sections 19-21 (e.g., an engine core), and may be housed within an inner nacelle structure / inner fixed structure (not shown) which provides an aerodynamic cover for the inner case 24. The inner case 24 may be configured with one or more axial and/or circumferential inner sub-casings; e.g., case segments. The outer case 26 may house at least the fan section 18, and may be housed within an outer nacelle structure (not shown) which provides an aerodynamic cover for the outer case 26. Briefly, the outer nacelle structure along with the outer case 26 overlaps the inner nacelle structure thereby defining a bypass gas path 28 radially between the nacelle structures. The outer case 26 may be configured with one or more axial and/or circumferential outer case segments.

Each of the engine sections 18-19B, 21A and 21B includes a respective rotor 30-34. Each of these rotors 30-34 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s). Each of the rotors 31-34 may also include one or more rotor disk linkages, which interconnect adjacent rotor disks within the respective rotor and/or the rotor to a shaft.

The fan rotor 30 is connected to a gear train 36, for example, through a fan shaft 38. The gear train 36 and the LPC rotor 31 are connected to and driven by the LPT rotor 34 through a low speed shaft 39. The HPC rotor 32 is connected to and driven by the HPT rotor 33 through a high speed shaft 40. The shafts 38-40 are rotatably supported by a plurality of bearings 42; e.g., rolling element and/or thrust bearings. Each of these bearings 42 is connected to the engine housing 22 (e.g., the inner case 24) by at least one stationary structure such as, for example, an annular support strut.

During operation, air enters the turbine engine 10 through the airflow inlet 14. This air is directed through the fan section 18 and into a core gas path 44 and the bypass gas path 28. The core gas path 44 extends sequentially through the engine sections 19-21. The air within the core gas path 44 may be referred to as "core air". The air within the bypass gas path 28 may be referred to as "bypass air".

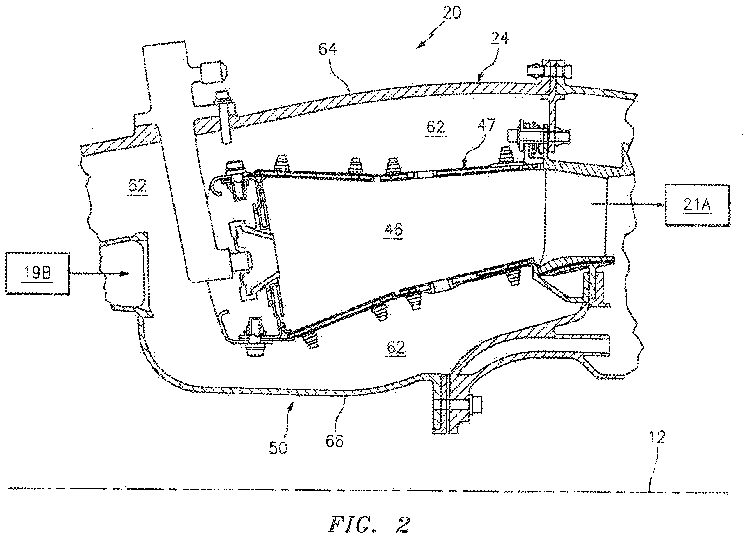

The core air is compressed by the compressor rotors 31 and 32 and directed into a combustion chamber 46 of a combustor 47 in the combustor section 20 (see also FIG. 2). Fuel is injected into the combustion chamber 46 and mixed with the compressed core air to provide a fuel-air mixture. This fuel air mixture is ignited and combustion products thereof flow through and sequentially cause the turbine rotors 33 and 34 to rotate. The rotation of the turbine rotors 33 and 34 respectively drive rotation of the compressor rotors 32 and 31 and, thus, compression of the air received from a core airflow inlet. The rotation of the turbine rotor 34 also drives rotation of the fan rotor 30, which propels bypass air through and out of the bypass gas path 28. The propulsion of the bypass air may account for a majority of thrust generated by the turbine engine 10, e.g., more than seventy-five percent (75%) of engine thrust. The turbine engine 10 of the present disclosure, however, is not limited to the foregoing exemplary thrust ratio.

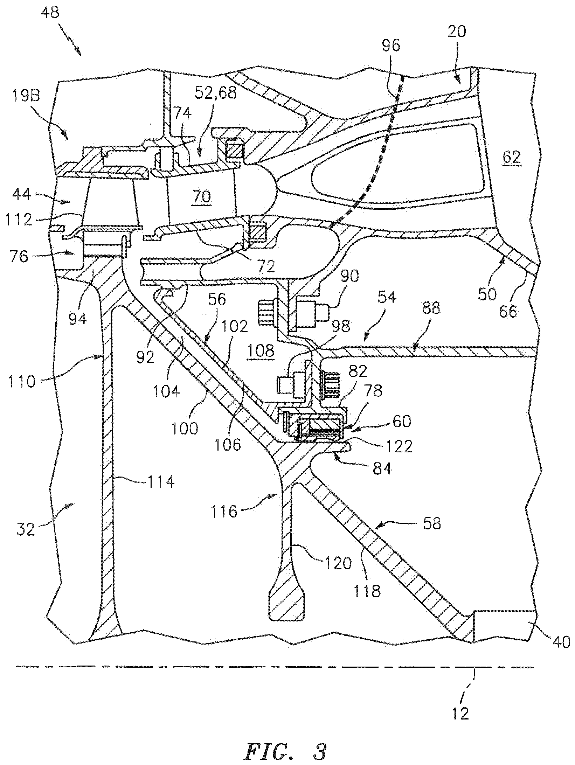

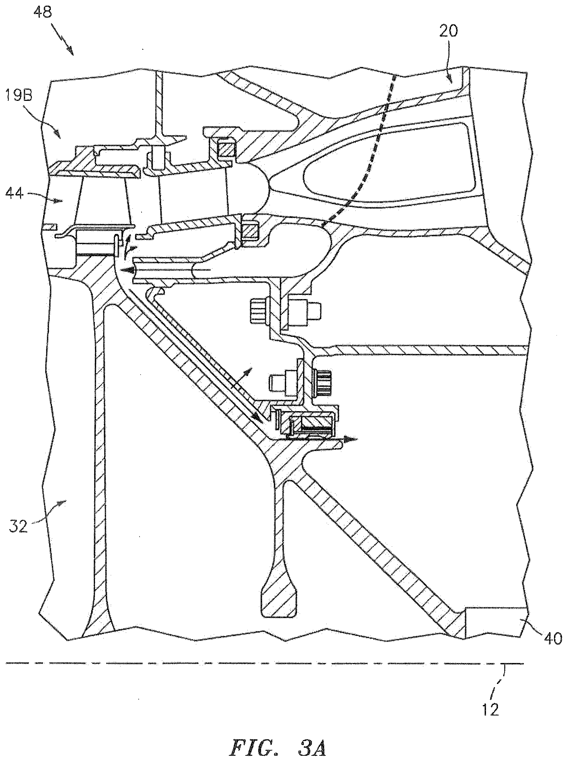

FIG. 3 illustrates an assembly 48 for the turbine engine 10. This turbine engine assembly 48 includes an assemblage of stator elements (e.g., 47, 50, 52, 54 and 56), a rotor 58 and a seal assembly 60.

The assemblage of stator elements includes the combustor 47 (see FIG. 2) and a diffuser structure 50. Referring to FIG. 2, the diffuser structure 50 is configured to form an annular diffuser plenum 62 that surrounds the combustor 47. For example, a radially outer portion 64 of the diffuser structure 50 is spaced apart from and circumscribes the combustor 47. This outer portion 64 may be configured as a segment of or otherwise connected to the inner case 24. A radially inner portion 66 of the diffuser structure 50 is spaced apart from and is disposed radially within the combustor 47.

Referring again to FIG. 3, the assemblage of stator elements also includes a stator vane assembly 52, a fixed stator structure 54 and a flow guide 56. The stator vane assembly 52 is configured to guide core air, which was compressed by the rotor 58, into the diffuser structure 50. This stator vane assembly 52 includes an array of stators vanes 68 (e.g., guide vanes) arranged circumferentially around the centerline 12. Each of these stator vanes 68 includes a stator vane airfoil 70, which extends radially between an inner platform 72 and an outer platform 74. The inner platform 72 is disposed axially between bladed rotor assemblies (e.g., 76) of the rotor 58 and the diffuser structure 50, and may be adjacent to one or more of the components 76 and 50. The outer platform 74 may be connected to a turbine engine case, which may be configured as or included in the inner case 24 (see FIG. 2).

The stator vane assembly 52 of FIG. 3 may be a segmented stator vane assembly. The stator vanes 68 may be configured into singlets, doublets, etc. with corresponding segments of the inner platform 72 and the outer platform 74. To seal gaps between the segments, the stator vane assembly 52 may include one or more feather seals (not shown) for sealing between inner platform 72 segments and/or the outer platform 74 segments. The stator vane assembly 52, of course, may also or alternatively include one or more other types of seals to seal inter-segment gaps. Furthermore, in some embodiments, the inner platform 72 and/or the outer platform 74 may each be configured with a full-hoop body.

The stator structure 54 is configured to locate and support a non-contact seal 78. The stator structure 54 of FIG. 3 includes an annular support structure 82. This support structure 82 circumscribes the rotor 58 and an annular seal land 84.

The support structure 82 may be configured having a monolithic full hoop body. Herein, the term "monolithic" may describe a component which is formed as a single unitary body. The support structure 82, for example, includes an integral, tubular body that is formed without any mechanically interconnected axial and/or circumferential segments. Note, in some embodiments, a monolithic body may include one or more bodies bonded together. In another example, arcuate segments (e.g., halves) may be respectively bonded together to form a full hoop body.

The support structure 82 and the stator structure 54 in general may be configured with the diffuser structure 50. The stator structure 54 of FIG. 3, for example, includes a mounting structure 88 which structurally ties the support structure 82 to the diffuser structure 50. This mounting structure 88 may be formed integral with the support structure 82. The mounting structure 88 may be mechanically attached to the diffuser structure 50 by, for example, one or more sets of fasteners (e.g., 90). However, in other embodiments, the support structure 82 and the stator structure 54 in general may alternatively be formed as an integral part of the diffuser structure 50.

The stator structure 54 also includes one or more nozzles 92. The nozzles 92 are tangential onboard injection (TOBI) nozzles. The nozzles 92 are arranged circumferentially around the centerline 12. Each of these nozzles 92 is configured to direct cooling air onto a portion of the rotor 58 such as, for example, a hub 94, blade roots, and/or other portion of the bladed rotor assembly 76. The nozzles 92 may each receive the cooling air from a respective conduit 96, which may receive this cooling air from a heat exchanger radially outboard of the diffuser structure 50 or another source or sources. The nozzles 92 may be formed integral with the mounting structure 88. However, in other embodiments, one or more of the nozzles 92 may be configured as a discrete structure which is attached to or independent of the stator structure 54.

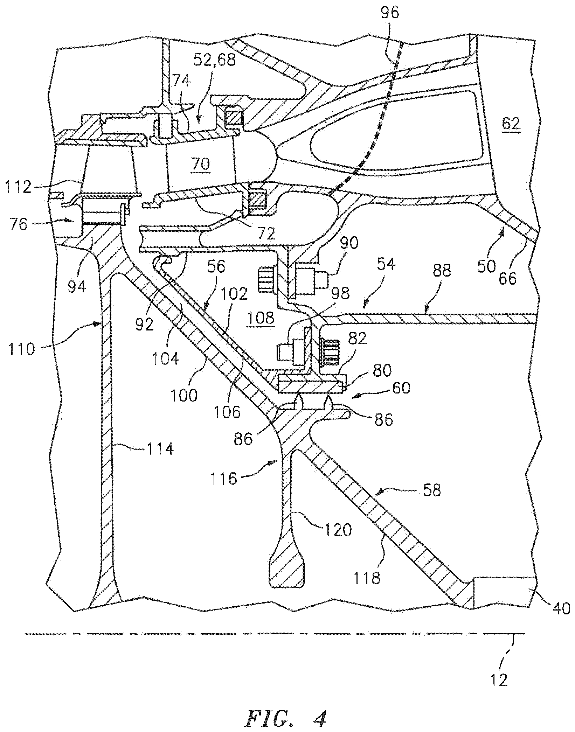

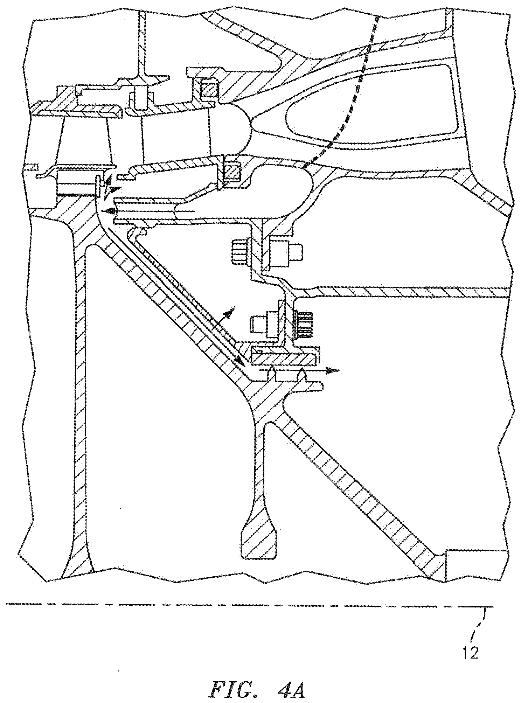

The flow guide 56 is configured with the stator structure 54. The flow guide 56 of FIG. 3, for example, is mechanically fastened to the mounting structure 88 by one or more fasteners 98. The flow guide 56 circumscribes a linkage of the rotor 58 and, more particularly, a conical linkage 100 of the rotor 58. The flow guide 56 includes an annular, conical portion 102 configured to form an annular duct 104 with the linkage 100, which duct 104 is configured to flow at least some of the cooling air directed out from the nozzles 92 along the linkage and towards the seal assembly 60 (see FIGS. 3A and 4A). The flow guide 56 includes one or more cooling apertures 106, which may be arranged around the centerline 12. Each cooling aperture 106 extends through the conical portion 102. Each cooling aperture 106 is configured to direct cooling air from the duct 104 and into a (e.g., annular) cavity 108 between the flow guide 56 and the stator structure 54 in order to cool the stator structure 54.

The rotor 58 may be configured as one of the rotors 30-34; e.g., the HPC rotor 32 (see FIG. 1). The rotor 58 of FIG. 3 includes at least the bladed rotor assembly 76; e.g., a final stage high pressure compressor (HPT) rotor assembly. The bladed rotor assembly 76 is disposed upstream of and adjacent to the stator components 52 and 92. The bladed rotor assembly 76 includes a rotor disk structure 110 and a plurality of rotor blades 112; e.g., compressor blades. These rotor blades 112 are arranged circumferentially around and attached to the hub of the rotor disk structure 110; e.g., via fir tree roots. The rotor disk structure 110 includes a rotor disk 114. This rotor disk 114 includes the hub 94, an annular web and an annular counterweight mass, where the web extends radially out from the counterweight mass to the hub 94.

The rotor 58 also includes another rotor disk structure 116 as well as one or more linkages 100 and 118. The rotor disk structure 116 includes the seal element 84 and a rotor disk 120. This rotor disk 120 includes an annular web and an annular counterweight mass, where the web extends radially out from the counterweight mass to the seal element 84. With this configuration, the seal element (here the seal land 84 in FIG. 3) is configured as an outer hub / rim of the rotor disk structure 116.

The seal land 84 is generally axially aligned with and circumscribes the rotor disk 120. The seal land 84 of FIG. 3 includes an axially extending annular flange with a cylindrical outer surface 122. Herein, the term "cylindrical" may describe a surface or part with a circular-annular cross-sectional geometry which extends substantially (e.g., only) axially along a centerline. In contrast, a "conical" surface or part may also extend in a radial direction towards or away from the centerline.

The seal land 84 may be configured having a monolithic full hoop body. The seal land 84, for example, includes an integral, tubular body that is formed without any mechanically interconnected axial and/or circumferential segments. Note, in some embodiments, a monolithic body may include one or more bodies bonded together. In another example, arcuate segments (e.g., halves) may be respectively bonded together to form a full hoop body.

The upstream linkage 100 may be configured as an annular, conical linkage. The upstream linkage 100 extends axially between and is connected to the rotor disk structures 110 and 116. The upstream linkage 100 may be formed integral with the rotor disk structures 110 and 116 as shown in FIG. 3. However, in alternative embodiments, the upstream linkage 100 may be attached (e.g., mechanically fastened) to one or both of the rotor disk structures 110 and 116. The present disclosure, however, is not limited to any particular linkage configuration; e.g., the upstream linkage 100 may alternatively have a cylindrical configuration.

The downstream linkage 118 may be configured as an annular, conical linkage. The downstream linkage 118 extends axially between and is connected to the rotor disk structure 116 and a shaft; e.g., the high speed shaft 40. The downstream linkage 118 may be formed integral with the rotor disk structure 116 as shown in FIG. 3. However, in alternative embodiments, the downstream linkage 118 may be attached (e.g., mechanically fastened) to the rotor disk structure 116. The downstream linkage 118 may be attached (e.g., mechanically fastened), or alternatively formed integral with, the high speed shaft 40. The present disclosure, however, is not limited to any particular linkage configuration; e.g., the downstream linkage 118 may alternatively have a cylindrical configuration.

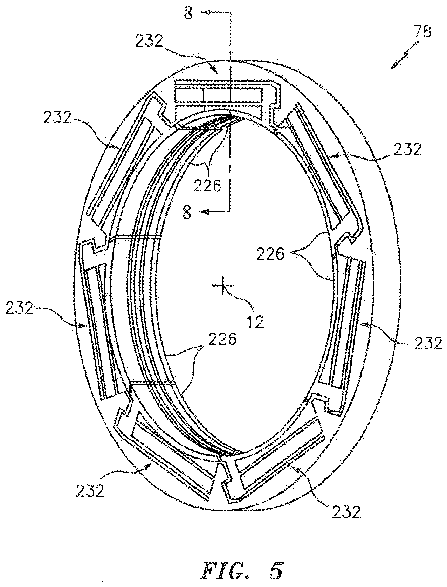

The seal assembly 60 is arranged in a radial gap between the stator structure 54 and the rotor disk structure 116. The seal assembly 60 is configured to substantially seal the respective gap. More particularly, the seal assembly 60 is configured to control (e.g., reduce or substantially eliminate) air leakage between the stator structure 54 and the rotor disk structure 116. Of course, in some embodiments, the seal assembly 60 may be configured to allow a predetermined amount of leakage air to pass thereacross in order to direct air into the axial gap between the stator structure 54 and the rotor 58. The seal assembly 60 includes an annular non-contact seal 78 such as, but not limited to, a hydrostatic non-contact seal. The seal assembly 60 also may include the seal element. In the embodiment of FIG. 3, the support structure 82 is configured as a carrier (see FIG. 5) for the non-contact seal 78.

Referring to FIGS. 5 to 8, the non-contact seal 78 includes one or more circumferentially spaced shoes 226 which are located in a non-contact position along the cylindrical surface of the seal land 84. Each shoe 226 is formed with a sealing surface 228 and a slot 230 extending radially inwardly toward the sealing surface 228.

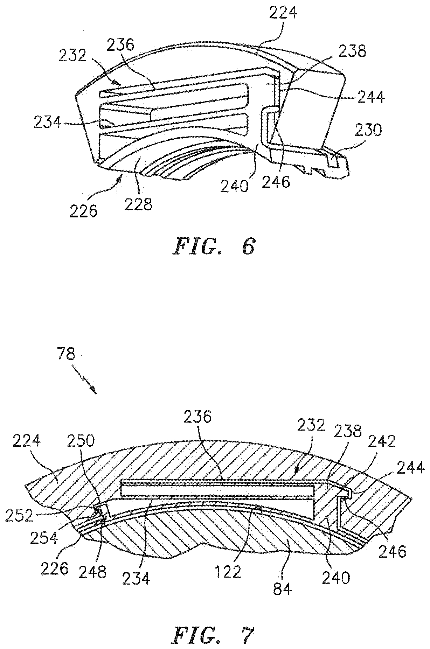

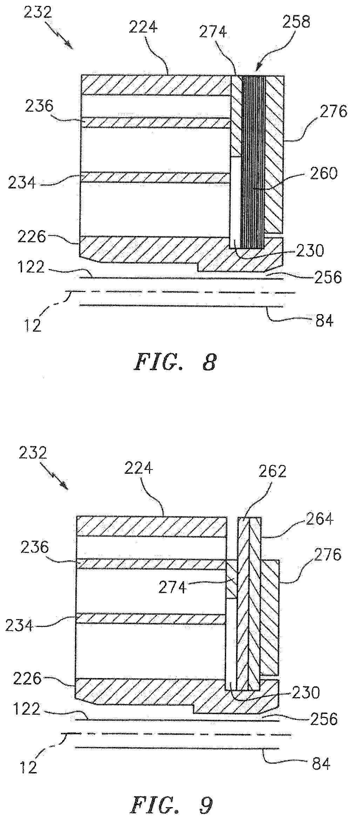

Under some operating conditions, particularly at higher pressures, it may be desirable to limit the extent of radial movement of the shoes 226 with respect to the seal land 84 to maintain tolerances; e.g., the spacing between the shoes 226 and the cylindrical surface 128. The non-contact seal 78 includes one or more circumferentially spaced spring elements 232, the details of one of which are best seen in FIGS. 7 and 8. Each spring element 232 is formed with an inner band 234 and an outer band 236 radially outwardly spaced from the inner band 234. One end of each of the bands 234 and 236 is mounted to or integrally formed with a stationary base 224 of the seal and the opposite end thereof is connected to a first stop 238. This base 224 may be configured as a monolithic full hoop body as best seen in FIG. 5. Of course, the present disclosure is not limited to the aforesaid exemplary configuration.

The first stop 238 includes a strip 240 which is connected to a shoe 226 (one of which is shown in FIGS. 8 and 9), and has an arm 242 opposite the shoe 226 which may be received within a recess 244 formed in the base 224. The recess 244 has a shoulder 246 positioned in alignment with the arm 242 of the first stop 238.

A second stop 248 is connected to or integrally formed with the strip 240 and is connected to the shoe 226. The second stop 248 is circumferentially spaced from the first stop 238 in a position near the point at which the inner and outer bands 234 and 236 connect to the base 224. The second stop 248 is formed with an arm 250 which may be received within a recess 252 in the base 224. The recess 252 has a shoulder 254 positioned in alignment with the arm 250 of second stop 248.

During operation, aerodynamic forces may be developed which apply a fluid pressure to the shoe 226 causing it to move radially with respect to the seal land 84. The fluid velocity increases as the gap 256 between the shoe 226 and seal land 84 increases, thus reducing pressure in the gap 256 and drawing the shoe 226 radially inwardly toward the rotor 58. As the seal gap 256 closes, the velocity decreases and the pressure increases within the seal gap 256 thus forcing the shoe 226 radially outwardly from the rotor 58. The spring elements 232 deflect and move with the shoe 226 to create a primary seal of the circumferential gap 256 between the rotor 58 and base 224 within predetermined design tolerances. The first and second stops 238 and 248 may limit the extent of radially inward and outward movement of the shoe 226 with respect to the rotor 58 for safety and operational limitation. A gap is provided between the arm 242 of first stop 238 and the shoulder 246, and between the arm 250 of second stop 248 and shoulder 254, such that the shoe 226 can move radially inwardly relative to the rotor 58. Such inward motion is limited by engagement of the arms 242, 250 with shoulders 246 and 254, respectively, to prevent the shoe 226 from contacting the rotor 58 or exceeding design tolerances for the gap between the two. The arms 242 and 250 also contact the base 224 in the event the shoe 226 moves radially outwardly relative to the rotor 58, to limit movement of the shoe 226 in that direction.

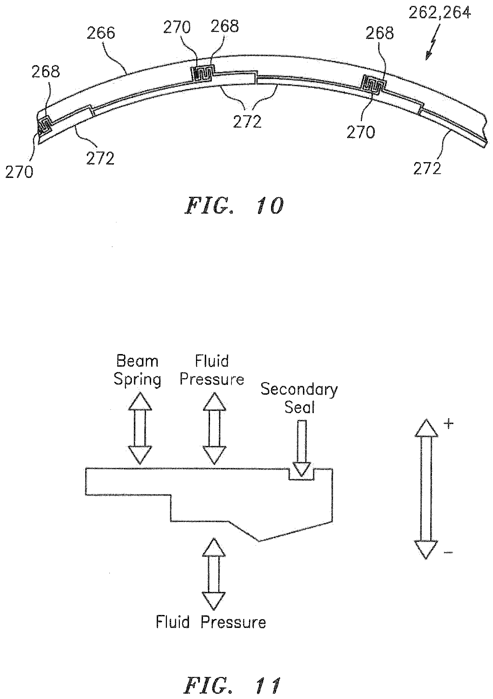

The non-contact seal 78 is also provided with a secondary seal which may take the form of a brush seal 258, as shown in FIG. 8, or a stack of at least two sealing elements oriented side-by-side and formed of thin sheets of metal or other suitable material as shown in FIGS. 9 and 10. The brush seal 258 is positioned so that one end of its bristles 260 extends into the slot 230 formed in the shoe 226. The bristles 260 deflect with the radial inward and outward movement of the shoe 226, in response to the application of fluid pressure as noted above, in such a way as to create a secondary seal of the gap 256 between the rotor 58 and base 224.

As shown in FIGS. 9 and 10, the secondary seal of this embodiment may include a stack of at least two sealing elements 262 and 264. Each of the sealing elements 262 and 264 includes an outer ring 266 formed with a plurality of circumferentially spaced openings 268, a spring member 270 mounted within each opening 268 and a plurality of inner ring segments 272 each connected to at least one of the spring members 270. The spring member 270 is depicted in FIG. 11 as a series of connected loops, but it should be understood that spring member 270 could take essentially any other form, including parallel bands as in the spring elements 232. The sealing elements 262 and 264 are oriented side-by-side and positioned so that the inner ring segments 272 extend into the slot 230 formed in the shoe 226. The spring members 270 deflect with the radial inward and outward movement of the shoe 226, in response to the application of fluid pressure as noted above, in such a way as to create a secondary seal of the gap 256 between the rotor 58 and base 224. As such, the sealing elements 272 and 264 assist the spring elements 232 in maintaining the shoe 226 within design clearances relative to the rotor 58.

One or more of the spring elements 262 and 264 may be formed of sheet metal or other suitable flexible, heat-resistant material. The sealing elements 262 and 264 may be attached to one another, such as by welding and/or any other bonding technique, a mechanical connection or the like, or they may positioned side-by-side within the slot 230 with no connection between them. In order to prevent fluid from passing through the openings 268 in the outer ring 266 of each sealing element 262 and 264, adjacent sealing elements are arranged so that the outer ring 266 of one sealing element 262 covers the openings 268 in the adjacent sealing element 264. Although not required, a front plate 274 may be positioned between the spring element 232 and the sealing element 262, and a back plate 276 may be located adjacent to the sealing element 264 for the purpose of assisting in supporting the sealing elements 262, 264 in position within the shoe 226.

During operation, the non-contact seal 78 is subjected to aerodynamic forces as a result of the passage of air along the surface of the shoes 226 and the seal land 84. The operation of non-contact seal 78 is dependent, in part, on the effect of these aerodynamic forces tending to lift the shoes 226 radially outwardly relative to the surface of rotor 58, and the counteracting forces imposed by the spring elements 232 and the secondary seals (e.g., brush seal 258 or the stacked seal formed by plates 262, 264) which tend to urge the shoes 226 in a direction toward the rotor 58. These forces acting on the shoe 226 are schematically depicted with arrows in FIG. 11. These forces acting on the non-contact seal 78 may be balanced to ensure that nominal clearance is maintained.

The present disclosure is not limited to the exemplary non-contact seal 78 described above. Various other non-contact seals are known in the art and may be reconfigured in light of the disclosure above to be included with the assembly 48 of the present disclosure. Other examples of non-contact seals are disclosed in U.S. Patent No. 8,172,232; U.S. Patent No. 8,002,285; U.S. Patent No. 7,896,352; U.S. Patent No. 7,410,173; U.S. Patent No. 7,182,345; and U.S. Patent No. 6,428,009. Still another example of a non-contact seal is a hydrodynamic non-contact seal. Furthermore, referring to FIG. 4, disclosing subject-matter which does not fall within the scope of the claims, the seal assembly 60 may alternatively be configured with a contact seal such as, but not limited to, a knife-edge seal arrangement.

The assembly 48 may be included in various aircraft and industrial turbine engines other than the one described above as well as in other types of rotational equipment; e.g., wind turbines, water turbines, rotary engines, etc. The assembly 48, for example, may be included in a geared turbine engine where a gear train connects one or more shafts to one or more rotors in a fan section, a compressor section and/or any other engine section. Alternatively, the assembly 48 may be included in a turbine engine configured without a gear train. The assembly 48 may be included in a geared or non-geared turbine engine configured with a single spool, with two spools (e.g., see FIG. 1), or with more than two spools. The turbine engine may be configured as a turbofan engine, a turbojet engine, a propfan engine, a pusher fan engine or any other type of turbine engine. The present invention therefore is not limited to any particular types or configurations of turbine engines or rotational equipment.

While various embodiments of the present invention have been disclosed, it will be apparent to those of ordinary skill in the art that many more embodiments and implementations are possible within the scope of the attached claims.

## Claims

1. An assembly for rotational equipment, the assembly comprising:
a rotor disk structure (116) including a rotor disk (120) and a seal land (84) circumscribing the rotor disk (120);
a stator structure (54) circumscribing the seal land (84);
a seal assembly (60) configured for sealing a gap between the stator structure (54) and the seal land (84), wherein the seal assembly (60) includes a non-contact seal (78);
a bladed rotor assembly (76) including a second rotor disk structure (114);
a linkage (100) extending axially between and connected to the rotor disk structure (116) and the second rotor disk structure (114);
a nozzle (92) configured to direct cooling air onto the second rotor disk structure (114), wherein the nozzle (92) comprises a tangential onboard injection nozzle; and
a guide (56) circumscribing the linkage (100) and configured to form a duct (104) with the linkage (100),
wherein the duct (104) flows at least some of the cooling air directed out from the nozzle (92) axially along the linkage (100), and
wherein the guide (56) is configured with the stator structure (54), and includes an aperture (106) which receives cooling air from the duct (104), and wherein the aperture is configured to direct the received cooling air into a cavity (108) between the guide (56) and the stator structure (54) for cooling the stator structure (54).

2. The assembly of claim 1, wherein the non-contact seal (78) is a hydrostatic non-contact seal.

3. The assembly of claim 1 or 2, wherein the non-contact seal (78) comprises:
an annular base (224);
a plurality of shoes (226) arranged around and radially adjacent the seal land (84); and
a plurality of spring elements (232), each of the spring elements (232) radially between and connecting a respective one of the shoes (226) to the base (224).

4. The assembly of claim 1, 2 or 3, wherein the seal land (84) is an outer hub of the rotor disk structure (116).

5. The assembly of any preceding claim, wherein the rotor disk (120) includes an annular counterweight mass and an annular web extending radially inward to the counterweight mass.

6. The assembly of any preceding claim, wherein the seal land (84) includes a cylindrical outer surface (122), and the gap extends radially between the stator structure (54) and the outer surface (122), and the seal land (84) comprises an axially extending annular flange which forms the outer surface (122).

7. The assembly of any preceding claim, wherein the second rotor disk structure (114) is in a last stage of a high pressure compressor section (19B).

8. The assembly of any preceding claim, wherein the duct (104) extends towards the seal assembly (60), and the seal assembly (60) is configured with an aperture to provide a controlled leakage axially thereacross.

9. The assembly of any of any preceding claim, further comprising:
a combustor (47) downstream of the bladed rotor assembly (76); and
a diffuser structure (50) forming a diffuser plenum (62) around the combustor (47), wherein the stator structure (54) is configured with the diffuser structure (50).

## Patentansprüche

1. Anordnung für rotierende Apparatur, wobei die Anordnung umfasst:
eine Rotorscheibenstruktur (116), die eine Rotorscheibe (120) und einen Dichtungssteg (84), der die Rotorscheibe (120) umgibt, beinhaltet;
eine Statorstruktur (54), die den Dichtungssteg (84) umgibt;
eine Dichtungsanordnung (60), die zum Abdichten eines Spalts zwischen der Statorstruktur (54) und dem Dichtungssteg (84) konfiguriert ist, wobei die Dichtungsanordnung (60) eine berührungslose Dichtung (78) beinhaltet;
eine beschaufelte Rotoranordnung (76), die eine zweite Rotorscheibenstruktur (114) beinhaltet;
eine Verbindung (100), die sich axial zwischen der Rotorscheibenstruktur (116) und der zweiten Rotorscheibenstruktur (114) erstreckt und mit diesen verbunden ist;
eine Düse (92), die so konfiguriert ist, dass sie Kühlluft auf die zweite Rotorscheibenstruktur (114) richtet, wobei die Düse (92) eine Tangential-Bordeinspritzungsdüse umfasst; und
eine Führung (56), die die Verbindung (100) umgibt und so konfiguriert ist, dass sie mit der Verbindung (100) einen Kanal (104) bildet,
wobei der Kanal (104) zumindest einen Teil der von der Düse (92) aus gerichteten Kühlluft axial entlang der Verbindung (100) leitet, und
wobei die Führung (56) mit der Statorstruktur (54) konfiguriert ist und eine Öffnung (106) beinhaltet, die Kühlluft von dem Kanal (104) empfängt, und wobei die Öffnung so konfiguriert ist, dass sie die empfangene Kühlluft in einen Hohlraum (108) zwischen der Führung (56) und der Statorstruktur (54) zum Kühlen der Statorstruktur (54) richtet.

2. Anordnung nach Anspruch 1, wobei die berührungslose Dichtung (78) eine hydrostatische berührungslose Dichtung ist.

3. Anordnung nach Anspruch 1 oder 2, wobei die berührungslose Dichtung (78) umfasst:
eine ringförmige Basis (224);
eine Vielzahl von Schuhen (226), die um den Dichtungssteg (84) und radial benachbart dazu angeordnet ist; und
eine Vielzahl von Federelementen (232), wobei jedes der Federelemente (232) radial zwischen einem jeweiligen der Schuhe (226) liegt und diesen mit der Basis (224) verbindet.

4. Anordnung nach Anspruch 1, 2 oder 3, wobei der Dichtungssteg (84) eine äußere Nabe der Rotorscheibenstruktur (116) ist.

5. Anordnung nach einem der vorhergehenden Ansprüche, wobei die Rotorscheibe (120) eine ringförmige Gegengewichtsmasse und einen ringförmigen Steg beinhaltet, der sich radial nach innen zu der Gegengewichtsmasse erstreckt.

6. Anordnung nach einem der vorhergehenden Ansprüche, wobei der Dichtungssteg (84) eine zylindrische Außenfläche (122) beinhaltet und sich der Spalt radial zwischen der Statorstruktur (54) und der Außenfläche (122) erstreckt und der Dichtungssteg (84) einen sich axial erstreckenden ringförmigen Flansch umfasst, der die Außenfläche (122) bildet.

7. Anordnung nach einem der vorhergehenden Ansprüche, wobei sich die zweite Rotorscheibenstruktur (114) in einer letzten Stufe eines Hochdruckverdichterabschnitts (19B) befindet.

8. Anordnung nach einem der vorhergehenden Ansprüche, wobei sich der Kanal (104) in Richtung der Dichtungsanordnung (60) erstreckt und die Dichtungsanordnung (60) mit einer Öffnung konfiguriert ist, um eine kontrollierte Leckage in axialer Richtung zu ermöglichen.

9. Anordnung nach einem der vorhergehenden Ansprüche, ferner umfassend:
eine Brennkammer (47) stromabwärts der beschaufelten Rotoranordnung (76); und
eine Diffusorstruktur (50), die ein Diffusorplenum (62) um die Brennkammer (47) bildet, wobei die Statorstruktur (54) mit der Diffusorstruktur (50) konfiguriert ist.

## Revendications

1. Ensemble pour équipement rotatif, l'ensemble comprenant :
une structure de disque de rotor (116) comportant un disque de rotor (120) et une portée d'étanchéité (84) entourant le disque de rotor (120) ;
une structure de stator (54) entourant la portée d'étanchéité (84) ;
un ensemble joint (60) configuré pour sceller un espace entre la structure de stator (54) et la portée d'étanchéité (84), dans lequel l'ensemble joint (60) comporte un joint sans contact (78) ;
un ensemble rotor à aubes (76) comportant une seconde structure de disque de rotor (114) ;
une liaison (100) s'étendant axialement entre et connectée à la structure de disque de rotor (116) et à la seconde structure de disque de rotor (114) ;
une buse (92) configurée pour diriger l'air de refroidissement sur la seconde structure de disque de rotor (114), dans lequel la buse (92) comprend une buse d'injection embarquée tangentielle ; et
un guide (56) circonscrivant la liaison (100) et configuré pour former un conduit (104) avec la liaison (100),
dans lequel le conduit (104) fait circuler au moins une partie de l'air de refroidissement dirigé hors de la buse (92) axialement le long de la liaison (100), et
dans lequel le guide (56) est configuré avec la structure de stator (54), et comporte une ouverture (106) qui reçoit l'air de refroidissement du conduit (104), et dans lequel l'ouverture est configurée pour diriger l'air de refroidissement reçu dans une cavité (108) entre le guide (56) et la structure de stator (54) pour refroidir la structure de stator (54).

2. Ensemble selon la revendication 1, dans lequel le joint sans contact (78) est un joint sans contact hydrostatique.

3. Ensemble selon la revendication 1 ou 2, dans lequel le joint sans contact (78) comprend :
une base annulaire (224) ;
une pluralité de patins (226) agencés autour et radialement adjacents à la portée d'étanchéité (84) ; et
une pluralité d'éléments de ressort (232), chacun des éléments de ressort (232) étant radialement entre et connectant l'un respectif des patins (226) à la base (224).

4. Ensemble selon la revendication 1, 2 ou 3, dans lequel la portée d'étanchéité (84) est un moyeu externe de la structure de disque de rotor (116).

5. Ensemble selon une quelconque revendication précédente, dans lequel le disque de rotor (120) comporte une masse de contrepoids annulaire et une âme annulaire s'étendant radialement vers l'intérieur de la masse de contrepoids.

6. Ensemble selon une quelconque revendication précédente, dans lequel la portée d'étanchéité (84) comporte une surface externe cylindrique (122), et l'espace s'étend radialement entre la structure de stator (54) et la surface externe (122), et la portée d'étanchéité (84) comprend une bride annulaire s'étendant axialement qui forme la surface externe (122).

7. Ensemble selon une quelconque revendication précédente, dans lequel la seconde structure de disque de rotor (114) est dans un dernier étage d'une section de compresseur haute pression (19B).

8. Ensemble selon une quelconque revendication précédente, dans lequel le conduit (104) s'étend vers l'ensemble joint (60), et l'ensemble joint (60) est configuré avec une ouverture pour fournir une fuite commandée axialement à travers celui-ci.

9. Ensemble selon une quelconque revendication précédente, comprenant en outre :
une chambre de combustion (47) en aval de l'ensemble rotor à aubes (76) ; et
une structure de diffuseur (50) formant un plénum de diffuseur (62) autour de la chambre de combustion (47), dans lequel la structure de stator (54) est configurée avec la structure de diffuseur (50).
